# EUROPEAN PATENT SPECIFICATION

(11) **EP 4 258 420 B1**
(45) Date of publication and mention of the grant of the patent: **28.08.2024**
(21) Application number: 22912804.6
(22) Date of filing: 13.01.2022
(51) Int. Cl.: H01M 10/613, H01M 10/0525, H01M 10/04, H01M 10/6557, H01M 10/6567

(54) **BATTERY, ELECTRICAL APPARATUS, AND METHOD AND APPARATUS FOR PREPARING BATTERY**
BATTERIE, STROMVERBRAUCHSVORRICHTUNG, VERFAHREN UND VORRICHTUNG ZUR HERSTELLUNG DER BATTERIE
BATTERIE, APPAREIL ÉLECTRIQUE, ET PROCÉDÉ ET APPAREIL DE PRÉPARATION DE BATTERIE

(43) Date of publication of application: 11.10.2023
(73) Proprietor: Contemporary Amperex Technology Co., Limited, Ningde City, Fujian 352100 (CN)
(72) Inventor: WANG, Zhi, Ningde, Fujian 352100 (CN); WANG, Peng, Ningde, Fujian 352100 (CN); LI, Xiang, Ningde, Fujian 352100 (CN); QIN, Feng, Ningde, Fujian 352100 (CN); JI, Hongye, Ningde, Fujian 352100 (CN)
(74) Representative: Herrmann, Uwe
(86) International application number: PCT/CN2022/071803
(87) International publication number: WO 2023/133756

(56) References cited:
- EP-A1- 2 144 323
- EP-A2- 1 261 065
- EP-B1- 1 299 921
- CN-A- 108 258 367
- CN-A- 108 258 367
- CN-A- 108 461 863
- CN-A- 111 834 700
- CN-A- 112 448 082
- CN-A- 112 868 128
- JP-A- 2020 198 168

## Description

### TECHNICAL FIELD

The present application relates to the technical field of batteries, and in particular, to a battery, a power consumption apparatus, and a method and an apparatus for preparing a battery.

### BACKGROUND

Energy saving and emission reduction are the key to a sustainable development of automotive industry. In this case, electric vehicles have become an important part of the sustainable development of the automotive industry due to their advantages of energy saving and environmental protection. For the electric vehicles, battery technology is also an important factor for their development.

With the development of the battery technology, various performances of a battery are constantly improving, among which, safety performance of the battery is particularly important. If the safety performance of the battery cannot be guaranteed, the battery cannot be used. Therefore, how to ensure the safety performance of the battery is an urgent technical problem to be solved in the battery technology.

EP 1 299 921 B1 relates to a heat exchanger structure for a plurality of electrochemical storage cells, comprising at least one channel element through which a temperature-adjusting medium flows. CN 108 258 367 A relates to a serpentine flat tube liquid cooling battery module, comprising an inlet, a distribution header, a serpentine flat tube, a collection header, a cylindrical shape Battery and an outlet. EP 2 144 323 A1 relates to a drive battery assembly of an electric, fuel cell or hybrid vehicle, comprising at least one cooling fin. CN 112 448 082 A discloses a cylindrical battery module, which improves the space utilization rate, increases the energy density of the cylindrical battery module, and improves the cooling effect. EP 1 261 065 A1 relates to a thermal management system for controlling or managing the temperature of individual electrochemical cells within the modules of a battery system. CN 108 461 863 A relates to the technical field of battery thermal management, in particular to a liquid-cooled flat tube and a battery module.

### SUMMARY

In view of the above problem, the present application provides a battery, a power consumption apparatus, a method and an apparatus for preparing a battery, which can enhance safety performance of the battery.

In a first aspect, the present application provides a battery cell, including: a plurality of layers of battery cell groups stacked in a first direction, where each layer of the battery cell group includes a plurality of battery cells arranged in an array; and a plurality of thermal management components provided between adjacent two layers of the battery cell groups in the first direction, where the thermal management component is configured to contain a fluid to adjust temperature of the battery cells located on both sides of the thermal management component, the plurality of the thermal management components are connected to each other in a second direction to form a layer of thermal management component groups without gaps to isolate the adjacent two layers of the battery cell groups, and the second direction is perpendicular to the first direction.

The plurality of thermal management components are connected to form a whole to isolate the two layers of the battery cell groups in the first direction, which can make it difficult for high-temperature and high-pressure substances discharged from a pressure relief mechanism to directly contact the battery cells located on other layers after thermal runaway occurs in some battery cells, thereby avoiding causing further thermal runaway issues and ensuring the safety performance of the battery. At the same time, the plurality of thermal management components are connected to form the whole, which may reduce production difficulty of a single thermal management component and improve production efficiency.

According to the present application, an end portion of the thermal management component in the second direction is provided with a connecting portion, and the connecting portion is configured to connect the adjacent thermal management component.

The plurality of thermal management components are connected through the connecting portion, which can isolate the adjacent two layers of the battery cell groups. When the temperature or pressure inside some battery cells reaches a threshold value, it is difficult for the high-temperature and high-pressure substances discharged from the pressure relief mechanism of the battery cell to pass through a layer of thermal management components formed by the plurality of thermal management components, to avoid the thermal runaway of some battery cells affecting the battery cells of other layers and causing further thermal runaway issues, ensuring the safety performance of the battery.

In some embodiments, the thickness of the connecting portion is smaller than the thickness of other parts of the thermal management component in the first direction, such that there is a gap between the connecting portion and the battery cell, and the gap is configured to get out of the way of connection position between an end cover and a side wall of the battery cell.

The gap between the connecting portion and the battery cell can prevent the connection position between the end cover and the side wall of the battery cell from destroying an insulating layer on a surface of the thermal management component, resulting in insulation failure, ensuring the safety performance of the battery.

In some embodiments, the connected two connecting portions are fixed by welding.

Welding at the connection position can make the connection between the plurality of thermal management components more secure, making it more difficult for the high-temperature and high-pressure substances to penetrate the layer of the thermal management components formed by the plurality of thermal management components, avoiding the thermal runaway of some battery cells affecting the battery cells of other layers, causing further thermal runaway issues, and further ensuring the safety performance of the battery.

In some embodiments, one of the two connected connecting portions is provided with a first step structure, and the other is provided with a second step structure, the first step structure and the second step structure are provided opposite to each other in the first direction, and overlap each other to form a welding plane.

The plurality of thermal management components are connected through the connecting portion provided with a step structure, which can increase a path for the high-temperature and high-pressure substances to pass through the layer of thermal management components formed by the plurality of thermal management components, effectively isolating the adjacent two layers of battery cell groups, avoiding the thermal runaway of some battery cells affecting the battery cells of other layers and causing further thermal runaway issues, ensuring the safety performance of the battery.

In some embodiments, one of the two connected connecting portions is provided with a protrusion in the second direction, and the other is provided with an groove in the second direction, the protrusion is provided corresponding to the groove, and the protrusion is accommodated in the groove to achieve the connection of the two connecting portions.

The connection of the plurality of thermal management components through the connecting portion provided with the protrusion and the groove can make the connection between the two connecting portions more secure, increase the path for the high-temperature and high-pressure substances to pass through the layer of thermal management components formed by the plurality of thermal management components, effectively isolating the adjacent two layers of the battery cell groups, avoiding the thermal runaway of some battery cells affecting the battery cells of other layers, causing further thermal runaway issues, and ensuring the safety performance of the battery.

In some embodiments, the connecting portion is provided with a reinforcing rib protruding towards the battery cell.

The reinforcing rib is provided near an end face of the connecting portion, which may enhance strength of the connecting portion, such that the interconnected connecting portions are not likely destroyed by an external force. An groove structure formed by the connection of the two connecting portions provided with the reinforcing ribs may be configured to place solder in some welding methods, such as brazing, so as to facilitate welding.

In some embodiments, the reinforcing rib is accommodated in space formed by the end cover and an electrode terminal of the battery cell.

The reinforcing rib is accommodated in the space formed by the end cover and the electrode terminal of the battery cell, so there is no need to design additional space to accommodate the reinforcing rib, while minimizing the possibility of interference of the reinforcing rib on the battery cell, which may avoid destroying the battery cell. Therefore, the safety performance of the battery can be ensured.

In some embodiments, a surface shape of the thermal management component matches a surface shape of the battery cell.

In this way, a contact area between the surface of the thermal management component and the surface of the battery cell may be larger, which is more conducive to adjusting the temperature of the battery cell, such that the battery cell can maintain the suitable temperature during the use, and ensure the safety performance of the battery including the plurality of battery cells during the use. At the same time, it can also save space inside the battery, which is conducive to improving energy density of the battery.

In some embodiments, the plurality of the battery cells of the battery cell group are bonded to the thermal management component in the first direction.

By bonding the plurality of battery cells of the battery cell group to the thermal management component, the plurality of battery cells may be fixed through the thermal management component to improve the strength of the battery cell and the battery cell group formed by the plurality of battery cells. At the same time, it can make the battery cell and the thermal management component more closely fit, improve an adjusting effect of the thermal management component on the temperature of the battery cell, and enable the battery to maintain the suitable temperature during the use, improving the safety performance of the battery.

In some embodiments, a surface of the connecting portion has an insulating layer.

The surface of the connecting portion has the insulating layer, which can improve an insulating effect of the thermal management component, avoid potential safety hazards caused by insulation failure, further improving the safety performance of the battery.

In a second aspect, the present application provides a power consumption apparatus, including the battery in the above embodiments, where the battery is configured to supply electrical energy for the power consumption apparatus.

In a third aspect, the present application provides a method for preparing a battery in the above embodiments, including: providing a plurality of layers of battery cell groups stacked in a first direction, where each layer of the battery cell group includes a plurality of battery cells arranged in an array; and providing a plurality of thermal management components provided between adjacent two layers of the battery cell groups in the first direction, where the thermal management component is configured to contain a fluid to adjust temperature of the battery cells located on both sides of the thermal management component, the plurality of the thermal management components are connected to each other in a second direction to isolate the adjacent two layers of the battery cell groups, and the second direction is perpendicular to the first direction.

In a fourth aspect, the present application provides an apparatus for preparing a battery in the above embodiments, including:
a first provision module configured to provide a plurality of layers of battery cell groups stacked in a first direction, where each layer of the battery cell group includes a plurality of battery cells arranged in an array; and
a second provision module configured to provide a plurality of thermal management components provided between adjacent two layers of the battery cell groups in the first direction, where the thermal management component is configured to contain a fluid to adjust temperature of the battery cells located on both sides of the thermal management component, the plurality of the thermal management components are connected to each other in a second direction to isolate the adjacent two layers of the battery cell groups, and the second direction is perpendicular to the first direction.

### BRIEF DESCRIPTION OF DRAWINGS

To describe technical solutions in embodiments of the present application more clearly, the following briefly introduces accompanying drawings required for describing the embodiments of the present application. Apparently, the accompanying drawings in the following description show merely some embodiments of the present application, and a person of ordinary skill in the art may still derive other drawings from these accompanying drawings without creative efforts.
FIG. 1 is a schematic structural diagram of a vehicle according to some embodiments of the present application;
FIG. 2 is an exploded schematic structural diagram of a battery according to some embodiments of the present application;
FIG. 3 is an exploded schematic structural diagram of a battery according to some embodiments of the present application;
FIG. 4 is an enlarged view of part M in FIG. 3;
FIG. 5 is a schematic structural diagram of a thermal management component;
FIG. 6 is a schematic structural diagram of mutual connection between a plurality of thermal management components;
FIG. 7 is a schematic diagram of a connecting portion according to the embodiments of the present application;
FIG. 8 is a schematic diagram of another connecting portion according to the embodiments of the present application;
FIG. 9 is a schematic diagram of another connecting portion according to the embodiments of the present application;
FIG. 10 is a schematic diagram of another connecting portion according to the embodiments of the present application;
FIG. 11 is a partial sectional view of a battery according to the embodiments of the present application;
FIG. 12 is an enlarged view of part C in FIG. 11;
FIG. 13 is a schematic flowchart of a method for preparing a battery according to some embodiments of the present application; and
FIG. 14 is a schematic block diagram of an apparatus for preparing a battery according to some embodiments of the present application.

In the accompanying drawings, the drawings are not drawn to actual scale.

### DESCRIPTION OF EMBODIMENTS

The following describes implementations of the present application in detail with reference to accompany drawings and embodiments. The detailed description of the following embodiments and the accompanying drawings are used to examplarily illustrate principles of the present application, but cannot be used to limit the scope of the present application, that is, the present application is not limited to the described embodiments.

In the description of the present application, it should be noted that unless otherwise provided, "a plurality of" means more than two; the terms "above", "below", "left", "right", "outside", "inside" and the like are orientations or positional relationship, and the terms are merely for convenience of describing the present application and for simplifying the description, but for indicating or implying that an indicated apparatus or element must have a specific orientation, and must be constructed and operated in a specific orientation, which thus may not be understood as limiting the present application. In addition, the terms "first", "second", "third" and the like are only intended for a purpose of description, and shall not be understood as an indication or implication of relative importance. "Vertical" is not strictly vertical, but within the allowable range of error. "Parallel" is not strictly parallel, but within the allowable range of error.

The orientation words in the following description are the directions shown in the figures, and are not intended to limit the specific structure of the present application. In the description of the present application, it should be also noted that unless otherwise explicitly specified and defined, the terms "mounting", "connecting", and "connection" should be understood in a broad sense, for example, they may be a fixed connection, a detachable connection, or an integrated connection; may be a direct connection and may also be an indirect connection via an intermediate medium. Those of ordinary skill in the art can appreciate the specific meanings of the foregoing terms in the present application according to specific conditions.

In the embodiments of the present application, same components are denoted by same reference numerals, and detailed description of the same components is omitted in different embodiments for brevity. It should be understood that dimensions such as thicknesses, lengths and widths of various components in embodiments of the present application shown in the drawings, as well as dimensions of the overall thickness, length and width of an integrated apparatus are merely illustrative, and should not form any limitation to the present application.

In the present application, a battery cell may include a lithium-ion secondary battery, a lithium-ion primary battery, a lithium-sulfur battery, a sodium/lithium-ion battery, a sodium-ion battery or a magnesium-ion battery and the like, which is not limited by the embodiments of the present application. The battery cell may be cylindrical, flat, cuboid or in another shape, which is not limited by the embodiments of the present application. The battery cell is generally divided into three types according to the way of packaging: a cylindrical battery cell, a prismatic battery cell and a pouch battery cells, which is not limited by the embodiments of the present application.

The battery mentioned in the embodiments of the present application refers to a single physical module that includes one or more battery cells to provide a higher voltage and capacity. For example, the battery mentioned in the present application may include a battery module or a battery pack. The battery generally includes a box body for enclosing one or more battery cells. The box body may prevent a liquid or other foreign matters from affecting the charging or discharging of the battery cell.

The battery cell includes an electrode assembly and an electrolytic solution, and the electrode assembly is composed of a positive electrode plate, a negative electrode plate and a separator. The operation of the battery cell mainly relies on the movement of metal ions between the positive electrode plate and the negative electrode plate. The positive electrode plate includes a positive electrode current collector and a positive electrode active substance layer. The positive electrode active substance layer is coated on a surface of the positive electrode current collector, the positive electrode current collector not coated with the positive electrode active substance layer protrudes from the positive electrode current collector coated with the positive electrode active substance layer, and the positive electrode current collector not coated with the positive electrode active substance layer is used as a positive electrode tab. As an example, in a lithium-ion battery, a material of the positive electrode current collector may be aluminum, and a positive electrode active substance may be lithium cobaltate, lithium iron phosphate, ternary lithium, lithium manganate and the like. The negative electrode sheet includes a negative electrode current collector and a negative active substance layer. The negative active substance layer is coated on a surface of the negative electrode current collector, and the negative current collector not coated with the negative active substance layer protrudes from the negative current collector coated with the negative active substance layer, and the negative electrode current collector not coated with the negative electrode active substance layer is used as a negative electrode tab. A material of the negative electrode current collector may be copper, and a negative electrode active substance may be carbon, silicon and the like. In order to ensure that no fusing occurs when a large current passes, there are a plurality of positive electrode tabs which are stacked together, and there are a plurality of negative electrode tabs which are stacked together. A material of the separator may be polypropylene (polypropylene, PP), polyethylene (polyethylene, PE) and the like. In addition, the electrode assembly may be a winding structure or a laminated structure, and the embodiments of the present application are not limited thereto.

In order to meet different power demands, the battery may include a plurality of battery cells, where the plurality of battery cells may be in series connection, parallel connection or series-parallel connection. The series-parallel connection refers to a combination of series connection and parallel connection. Optionally, the plurality of battery cells may be first connected in series, in parallel or in series and parallel to form a battery module, and then a plurality of battery modules are connected in series, in parallel or in series and parallel to form a battery. That is, the plurality of battery cells may directly form the battery, or may first form the battery module, and then battery modules form the battery. The battery is further provided in a power consumption device for supplying electrical energy for the power consumption device.

With the development of the battery technology, it is necessary to consider many design factors at the same time, such as energy density, cycle life, discharge capacity, C-rate and other performance parameters. In addition, safety of the battery should also be considered.

With respect to the battery, the main safety hazard comes from the charging and discharging process, and in order to improve the safety performance of the battery, the battery cell is generally provided with a pressure relief mechanism. The pressure relief mechanism refers to an element or component that is actuated when internal pressure or temperature of the battery cell reaches a predetermined threshold value, to relieve the internal pressure. The predetermined threshold value may be adjusted according to different design requirements. The predetermined threshold may depend on the material of one or more of the positive electrode sheet, the negative electrode sheet, the electrolytic solution and the separator in the battery cell. The pressure relief mechanism may adopt such as pressure-sensitive or temperature-sensitive elements or components, that is, when the internal pressure or temperature of the battery cell reaches the predetermined threshold value, the press relief mechanism is actuated, thereby forming a channel for relieving the internal pressure.

The "actuation" mentioned in the present application means that the pressure relief mechanism acts, such that the internal pressure and temperature of the battery cell is relieved. The action generated by the pressure relief mechanism may include but be not limited to: at least a portion of the pressure relief mechanism being fractured, torn or melted, and so on. After the pressure relief mechanism is actuated, high-temperature and high-pressure substances inside the battery cell are discharged as emissions from the pressure relief mechanism In this way, the pressure in the battery cell can be relieved at the controllable pressure or temperature, thereby avoiding potentially more serious accidents.

The emissions from the battery cell mentioned in the present application include but are not limited to: the electrolytic solution, dissolved or split positive and negative electrode sheets, fragments of the separator, high-temperature and high-pressure gas generated by reaction, flame and the like.

The pressure relief mechanism on the battery cell has an important influence on the safety of the battery. For example, when short circuit, overcharge and other phenomena occur in the battery cell, it may lead to thermal runaway inside the battery cell, resulting in a sudden increase in pressure or temperature. In this case, the internal pressure and temperature may be released outwards through the actuation of the pressure relief mechanism, to prevent the battery cell from exploding and catching fire.

A battery is usually provided with a plurality of battery cells, and the plurality of battery cells may be arranged in a multi-layer structure inside the battery. When the pressure relief mechanisms of some battery cells are actuated, the high-temperature and high-pressure substances inside the battery cell will spray outwards, especially a gas generated when thermal runaway occurs inside the battery cell, which is likely to rush out and affect battery cells of other layers. For example, if the battery cell where thermal runaway occurs is located at the lower layer that is relatively lower in the multi-layer structure, the high-temperature and high-pressure substances inside the battery cell, such as a high-temperature and high-pressure gas, are likely to directly impact the battery cell of the upper layer located relatively upper in the multi-layer structure, causing the temperature of battery cell of the upper layer to rise, resulting in further thermal runaway issues.

In view of this, the present application provides a battery, including a plurality of thermal management components provided between adjacent two layers of battery cell groups in a plurality of layers of battery cell groups and connected to each other to isolate the adjacent two layers of the battery cell groups. After the pressure relief mechanism of the battery cell is actuated, even if the high-temperature and high-pressure substances inside the battery cell are sprayed outwards, they will be blocked by the interconnected battery cells, preventing the high-temperature and high-pressure substances discharged by the pressure relief mechanism of the battery cell from impacting the battery cells of other layers, causing further thermal runaway issues. Therefore, the safety performance of the battery can be ensured.

The technical solutions described by the embodiments of the present application are applied to various power consumption devices using the battery. The power consumption devices may be vehicles, mobile phones, portable devices, laptops, ships, spacecraft, electric toys, electric tools and the like. The vehicles may be fuel vehicles, gas vehicles or new energy vehicles, and new energy vehicles may be pure electric vehicles, hybrid vehicles or extended-range vehicles and the like; the spacecrafts include airplanes, rockets, space shuttles, spaceships and the like; the electric toys include fixed or mobile electric toys, such as game consoles, electric vehicle toys, electric ship toys and electric airplane toys; the electric tools include metal cutting electric tools, grinding electric tools, assembly electric tools and railway electric tools, such as electric drills, electric grinders, electric wrenches, electric screwdrivers, electric hammers, impact drills, concrete vibrators, and electric planers. The embodiments of the present application do not make special limitations on the above power consumption devices.

In the following embodiments, for the convenience of description, a vehicle is used as an example of a power consumption device for illustration.

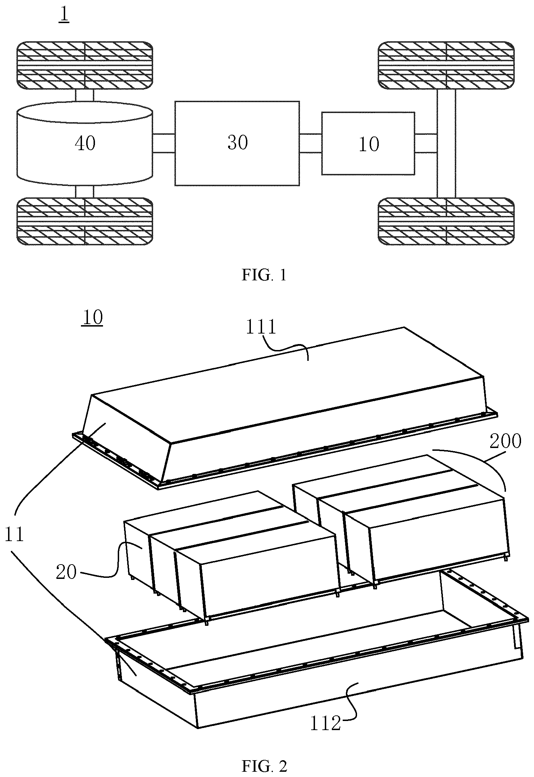

For example, as shown in FIG. 1, FIG. 1 is a schematic structural diagram of a vehicle 1 according to an embodiment of the present application. The vehicle 1 may be a fuel-powered vehicle, a gas-powered vehicle or a new energy vehicle, and the new energy vehicle may be a battery electric vehicle, a hybrid vehicle, an extended-range vehicle and the like. A motor 40, a controller 30 and a battery 10 may be provided inside the vehicle 1, and the controller 30 is configured to control the battery 10 to supply power to the motor 40. For example, the battery 10 may be provided at the bottom or the head or the tail of the vehicle 1. The battery 10 may be configured to supply power to the vehicle 1. For example, the battery 10 may be used as an operation power supply of the vehicle 1 and is configured for a circuit system of the vehicle 1, for example, for a working power demand of the vehicle 1 during startup, navigation and running. In another embodiment of the present application, the battery 10 may be used not only as the operation power supply of the vehicle 1 but also as a driving power supply of the vehicle 1, replacing or partially replacing fuel or natural gas to provide driving power for the vehicle 1.

In order to meet different power demands, the battery may include a plurality of battery cells, where the plurality of battery cells may be in series connection, parallel connection or series-parallel connection. The series-parallel connection refers to a combination of series connection and parallel connection. The battery may also be called a battery pack. Optionally, the plurality of battery cells may be first connected in series, in parallel or in series and parallel to form a battery module, and then a plurality of battery modules are connected in series, in parallel or in series and parallel to form a battery. That is, the plurality of battery cells may directly form the battery, or may first form the battery modules, and then the battery modules form the battery.

For example, FIG. 2 shows a schematic structural diagram of a battery 10 according to an embodiment of the present application, and the battery 10 may include at least one battery module 200. The battery module 200 includes a plurality of battery cells 20. The battery 10 may further include a box body 11, the interior of the box body 11 is a hollow structure, and the plurality of battery cells 20 are accommodated in the box body 11. FIG. 2 shows a possible implementation manner of the box body 11 according to the embodiments of the present application. As shown in FIG. 2, the box body 11 may include two parts, which are referred to as a first box body part 111 and a second box body part 112, respectively, and the first box body part 111 and the second box body part 112 are fastened together. The shape of the first box body part 111 and the second box body part 112 may be determined according to the shape of the battery module 200, and at least one of the first box body part 111 and the second box body part 112 has an opening. For example, as shown in FIG. 2, the first box body part 111 and the second box body part 112 each may be a hollow cuboid and each has only one face as an opening face, the opening of the first box body part 111 is provided opposite to the opening of the second box body part 112, and the first box body part 111 and the second box body part 112 are fastened to each other to form the box body 11 with a closed cavity.

For another example, different from that shown in FIG. 2, the first box body part 111 and the second box body part 112 may have only one hollow cuboid with the opening, and the other is a plate shape to cover the opening. For example, in an example that the second box body part 112 is the hollow cuboid and has only one face as the opening face and the first box body part 111 is in the plate shape, the opening of the second box body part 112 is covered by the first box body part 111 to form the box body 11 with the closed cavity, and the cavity may be configured to accommodate the plurality of battery cells 20. The plurality of battery cells 20 are combined in parallel connection or series connection or series-parallel connection and are then placed in the box body 11 formed by fastening the first box body part 111 to the second box body part 112.

Optionally, the battery 10 may further include other structures, which is not repeated redundantly herein. For example, the battery 10 may further include a bus component. The bus component is configured to implement an electrical connection between the plurality of battery cells 20, such as parallel connection, series connection or series-parallel connection. Specifically, the bus component may implement the electric connection between the battery cells 20 by connecting electrode terminals of the battery cells 20. Furthermore, the bus component may be fixed to the electrode terminals of the battery cells 20 by means of welding. Electric energy of the plurality of battery cells 20 may be further led out through an electrically conductive mechanism passing through the box body 11.

According to different power demands, the number of the battery cells 20 in the battery module 200 may be set to any value. The plurality of battery cells 20 may be connected in series, in parallel or in series and parallel to implement larger capacity or power. Since there may be many battery cells 20 included in each battery 10, the battery cells 20 may be provided in groups for convenience of installation, and each group of battery cells 20 forms the battery module 200. The number of the battery cells 20 included in the battery module 200 is not limited and may be set according to the requirements.

The battery 10 may include a plurality of battery modules 200, and the battery modules 200 may be connected in series, in parallel or in series and parallel.

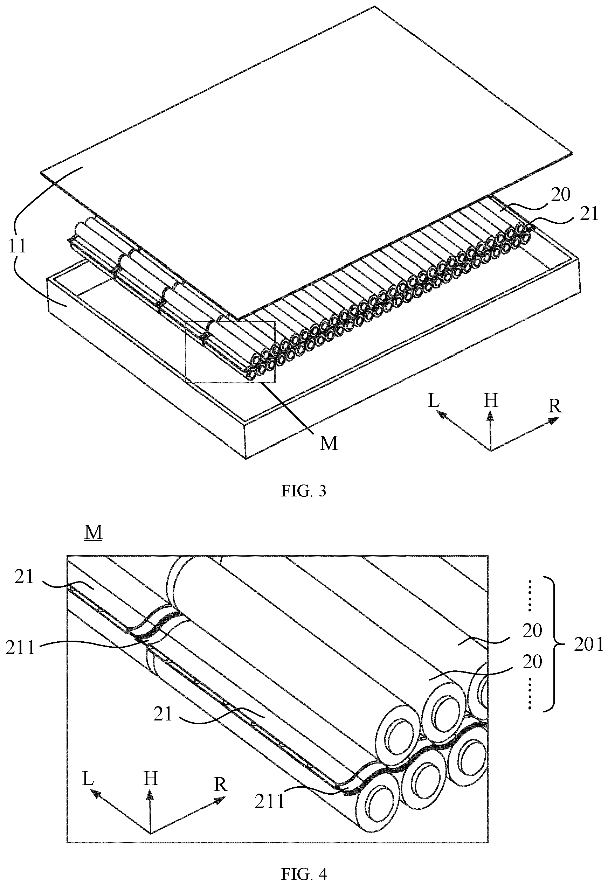

FIG. 3 is an exploded schematic structural diagram of a battery 10 according to some embodiments of the present application, in which the battery 10 shown includes a plurality of layers of battery cell groups 201 stacked in a first direction H and a plurality of thermal management components 21. FIG. 4 is an enlarged view of part M in FIG. 3. As shown in FIG. 3, each layer of battery cell group 201 includes a plurality of battery cells 20 arranged in an array, and the plurality of thermal management components 21 are provided between adj acent two layers of battery cell groups 201 in the first direction H. The thermal management component 21 is configured to contain a fluid to adjust temperature of the battery cells 20 located on both sides of the thermal management component 21, the plurality of the thermal management components 21 are connected to each other in a second direction L to isolate the adjacent two layers of the battery cell groups 201, and the second direction L is perpendicular to the first direction H.

For ease of understanding and description, the embodiments provided in the present application are only illustrated with a cylindrical battery cell 20. It should be understood that the embodiments provided in the present application are also applicable to a rectangular shaped battery cell 20 or a pouch battery cell 20, which is not limited in the embodiments of the present application.

It can be seen from FIG. 3 that an array arrangement refers to arranging the plurality of battery cells 20 in the second direction L and a third direction R, and arranging a layer of battery cell group 201 on a plane parallel to the second direction L and the third direction R, and the second direction L and the third direction R are perpendicular to each other. For example, in an array arrangement manner shown in FIG. 3, the second direction L is parallel to an axial direction of the battery cell 20. A stacking arrangement refers to arranging a plurality of layers of battery cell groups 201 in the first direction H, where the first direction H is perpendicular to a plane formed by the second direction L and the third direction R. It should be understood that the first direction H, the second direction L, and the third direction R pointed to by arrows in FIG. 3 are schematic and do not indicate specific orientations, that is, the first direction H, the second direction L, and the third direction R indicate directions parallel to a straight line where the arrows are located in the figure.

In the first direction H, a thermal management component 21 is provided between adjacent two layers of battery cell groups 201 in the a plurality of layers of battery cell groups 201, and the thermal management component 21 has a cavity structure that may contain a fluid to adjust the temperature of the plurality of battery cells 20. The fluid here may be a liquid or a gas, and the temperature adjustment means heating or cooling the plurality of battery cells 20. In a case of cooling or lowering the temperature of the battery cell 20, the thermal management component 21 is configured to accommodate a cooling fluid to lower the temperature of the plurality of battery cells 20. In this case, the thermal management component 21 may also be called a cooling component, a cooling system or a cooling plate and the like. The fluid accommodated by the thermal management component 21 may also be called a cooling medium or a cooling fluid, and more specifically, may be called a cooling liquid or a cooling gas. In addition, the thermal management component 21 may also be configured to heat to rise the temperature of the plurality of battery cells 20, which is not limited by the embodiments of the present application. Optionally, the fluid may flow in a circulating manner to achieve a better temperature adjustment effect. Optionally, the fluid may be water, a mixture of water and ethylene glycol, or air and the like.

The thermal management components 21 located on the same plane are referred to as a layer of thermal management component groups, and the layer of thermal management component groups may include the plurality of thermal management components 21. It can be seen from FIG. 3 and FIG. 4 that the plurality of thermal management components 21 are connected to each other in the second direction L to form a layer of thermal management component groups without gaps, so as to isolate the adjacent two layers of battery cell groups 201, where the second direction L is perpendicular to the first direction H.

FIG. 3 and FIG. 4 only show the stacking arrangement of two layers of battery cell groups 201, and a layer of thermal management component groups is provided between the two layers of the battery cell groups 201. It should be understood that the battery 10 may also have more layers of the battery cell groups 201 stacked, and a layer of thermal management components 21 connected to each other in the second direction L may be provided between every adjacent two layers of the battery cell groups 201.

The plurality of thermal management components 21 are connected to form a whole to isolate the two layers of the battery cell groups 201 in the first direction H, which can make it difficult for the high-temperature and high-pressure substances discharged from a pressure relief mechanism to directly contact the battery cells 20 located on other layers after thermal runaway occurs in some battery cells 20, thereby avoiding causing further thermal runaway issues and ensuring the safety performance of the battery 10. At the same time, the plurality of thermal management components 21 are connected to form the whole, which can reduce production difficulty of a single thermal management component 21 and improve production efficiency.

According to the present application, an end portion of the thermal management component 21 in the second direction L is provided with a connecting portion 211, and the connecting portion 211 is configured to connect the adjacent thermal management component 21.

The end portion of the thermal management component 21 in the second direction L refers to a portion of the thermal management component 21 perpendicular to the second direction L, for example, may be two end faces perpendicular to the second direction L. The connecting portion 211 refers to a portion extending in the second direction L from the end portion of the thermal management component 21. The connecting portion 211 may be provided at both end portions of the thermal management component 21 in the second direction L, or may be provided at only one end portion. For example, the thermal management component 21 at an edge position of a layer of the thermal management component groups may only have the connecting portion 211 provided at one end portion for connecting with another thermal management component 21, and the end portion not provided with the connecting portion 211 may serve as an edge of the layer of the thermal management component groups, and is not connected with any thermal management component 21.

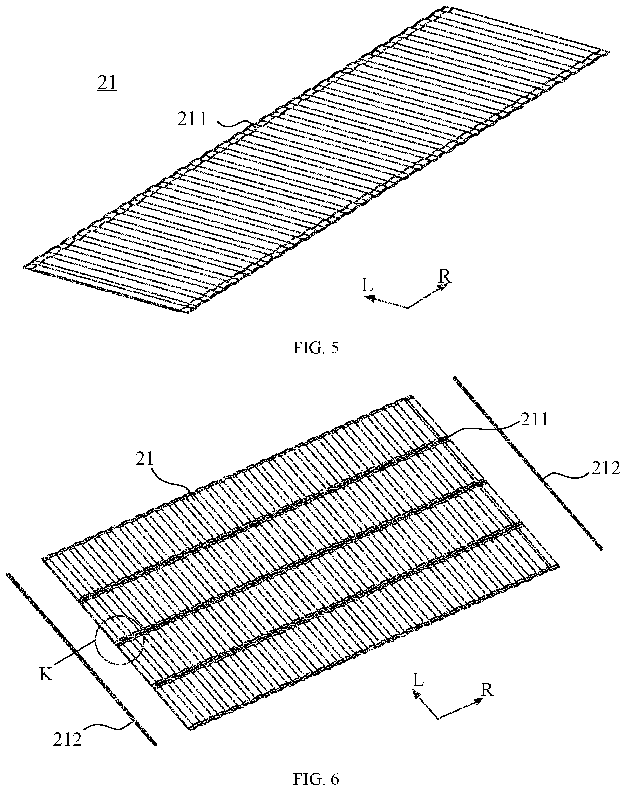

As shown in FIG. 5 and FIG. 6, FIG. 5 shows a thermal management component 21 among a plurality of thermal management components 21, and FIG. 6 shows a layer of thermal management component groups formed by a plurality of thermal management components 21 interconnected. Arranging the plurality of thermal management components 21 in FIG. 5 in the second direction L and connecting them to each other through the connecting portion 211 may form the layer of the thermal management component groups shown in FIG. 6. The number and arrangement manner of the thermal management component 21 shown in FIG. 6 are only examples and not limited.

In a possible embodiment, the layer of the thermal management component groups shown in FIG. 6 may also be provided with a current collecting component 212 for centralized control of the fluid in the thermal management component 21. When the battery 10 is provided with a plurality of layers of the thermal management component groups, each layer of the thermal management component group may be provided with the current collecting component 212, or only one current collecting component 212 may be provided in the plurality of layers of the thermal management component groups, which is not limited in the present application.

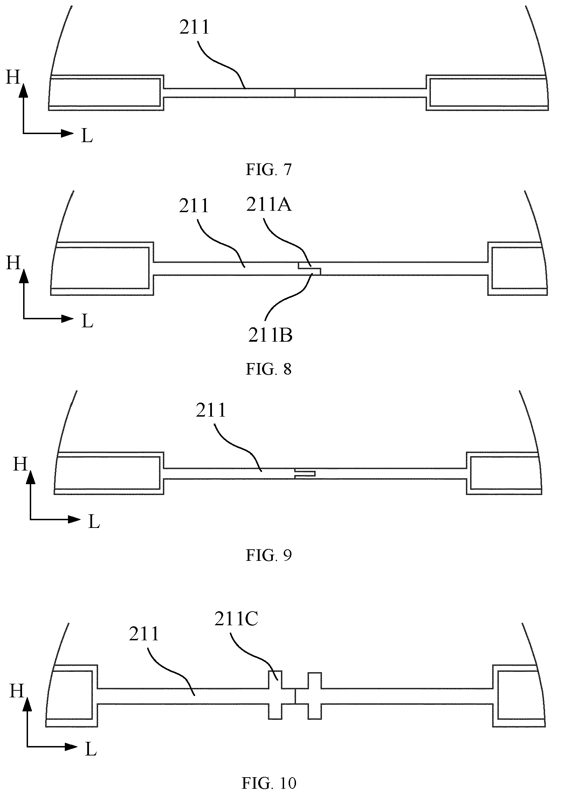

FIG. 7 is a schematic diagram of a connecting portion 211 according to the embodiments of the present application, showing a possible schematic cross-sectional view of part K in FIG. 6 on a plane formed parallel to a first direction H and a second direction L. It can be seen from FIG. 7 that since the connecting portion 211 is provided at an end portion of a thermal management component 21 in the second direction L, the connecting portions 211 on the end portions of the two thermal management components 21 are abutting against each other in the second direction L to form a layer of thermal management component groups without gaps.

The plurality of thermal management components 21 are connected through the connecting portion 211, which can isolate adjacent two layers of battery cell groups 201. When the temperature or pressure inside some battery cells 20 reaches a threshold value, it is difficult for the high-temperature and high-pressure substances discharged from the pressure relief mechanism of the battery cell 20 to pass through a layer of thermal management components 21 formed by the plurality of thermal management components 21, to avoid the thermal runaway of some battery cells 20 affecting the battery cells 20 of other layers and causing further thermal runaway issues, ensuring the safety performance of a battery 10.

According to some embodiments of the present application, optionally, one of the two connected connecting portions 211 is provided with a first step structure 211A, and the other is provided with a second step structure 211B, the first step structure 211A and the second step structure 211B are provided opposite to each other in the first direction H, and overlap each other to form a welding plane.

FIG. 8 is a schematic diagram of another connecting portion 211 according to the embodiments of the present application, showing another possible schematic cross-sectional view of part K in FIG. 6 on a plane formed parallel to a first direction H and a second direction L. The two connecting portions 211 shown in FIG. 8 are overlapped by step structures provided to each other, for example, one of the two connected connecting portions 211 is provided with a first step structure 211A, and the other is provided with a second step structure 211B. The first step structure 211A and the second step structure 211B are provided opposite to each other in the first direction H, such that the two step structures can form a plane after being overlapped with each other. The plane may be a welding plane, which is convenient for a welding device to weld gaps formed by the overlapped two step structures when welding is required.

A plurality of thermal management components 21 are connected through the connecting portion 211 provided with the step structure, which can increase a path for the high-temperature and high-pressure substances to pass through a layer of thermal management components 21 formed by the plurality of thermal management components 21, effectively isolating adjacent two layers of battery cell groups 201, avoiding the thermal runaway of some battery cells 20 affecting the battery cells 20 of other layers and causing further thermal runaway issues, ensuring the safety performance of a battery 10.

According to some embodiments of the present application, optionally, one of the two connected connecting portions 211 is provided with a protrusion in the second direction L, and the other is provided with an groove in the second direction L, the protrusion is provided corresponding to the groove, and the protrusion is accommodated in the groove to achieve the connection of the two connecting portions 211.

FIG. 9 is a schematic diagram of another connecting portion 211 according to the embodiments of the present application, showing another possible schematic cross-sectional view of part K in FIG. 6 on a plane formed parallel to a first direction H and a second direction L. Between the two thermal management components 21 shown in FIG. 9, one of the connected two connecting portions 211 is provided with a protrusion in the second direction L, for example, which may be formed by extending a portion of an end face of the connecting portion 211 perpendicular to the second direction L in the second direction L. In the first direction H, that is, in a thickness direction of the thermal management component 21, the thickness of the protrusion is smaller than the thickness of the connecting portion 211. In one possible implementation manner, the protrusion may be located in the first direction H and in the middle of a end portion of the connecting portion 211, where the end portion of the connecting portion 211 refers to a portion of the connecting portion 211 that is perpendicular to the second direction L, for example, it may be an end face that is perpendicular to the second direction L. The other connecting portion 211 connected with the above connecting portion 211 is provided with an groove corresponding to the protrusion, such that the protrusion can be accommodated in the groove, that is, the protrusion is inserted into the groove, so as to achieve the connection of the two connecting portions 211.

The connection of a plurality of thermal management components 21 through the connecting portion 211 provided with the protrusion and the groove can make the connection between the two connecting portions 211 more secure, increase the path for the high-temperature and high-pressure substances to pass through a layer of thermal management components 21 formed by the plurality of thermal management components 21, effectively isolating adjacent two layers of battery cell groups 201, avoiding the thermal runaway of some battery cells 20 affecting the battery cells 20 of other layers, causing further thermal runaway issues, and ensuring the safety performance of a battery 10.

According to some embodiments of the present application, optionally, the connecting portion 211 is provided with a reinforcing rib 211C protruding towards the battery cell 20.

FIG. 10 is a schematic diagram of another connecting portion 211 according to the embodiments of the present application, showing another possible schematic cross-sectional view of part K in FIG. 6 on a plane formed parallel to a first direction H and a second direction L. FIG. 10 shows that the connecting portion 211 is provided with a reinforcing rib 211C protruding towards a battery cell 20, and the reinforcing rib 211C may be provided on the connecting portion 211 of any structure provided by the embodiments of the present application. The reinforcing rib 211C may protrude towards the battery cell 20 in any layer of two layers of battery cell groups 201 isolated by a plurality of thermal management components 21, and may also protrude towards the battery cell 20 in the two layers of the battery cell groups 201 at the same time.

The reinforcing rib 211C may be provided at a position at a certain distance from an end surface of the connecting portion 211 in the second direction L. Taking a structure shown in FIG. 10 as an example, the reinforcing rib 211C protrudes towards the battery cell 20 in the two layers of the battery cell groups 201 at the same time, and the two connecting portions 211 may form an H-shaped structure when abutting against each other.

The reinforcing rib 211C is provided near the end face of the connecting portion 211, which may enhance strength of the connecting portion 211, such that the interconnected connecting portions 211 are not likely destroyed by an external force. An groove structure formed by the connection of the two connecting portions 211 provided with the reinforcing rib 211C may be configured to place solder in some welding methods, such as brazing, so as to facilitate welding.

According to some embodiments of the present application, optionally, the connected two connecting portions 211 are fixed by welding.

The connecting portion 211 shown in the above FIG. 7 to FIG. 10 may be fixed by welding. For example, when an end portion of a connector is connected by abutting, lapping or plugging, a gap formed on a surface perpendicular to a first direction H of the two connecting portions 211 may be welded, such that the connection between the plurality of thermal management components 21 is tighter.

Welding at the connection position can make the connection between the plurality of thermal management components 21 more secure, making it more difficult for the high-temperature and high-pressure substances to penetrate a layer of thermal management components 21 formed by a plurality of thermal management components 21, avoiding the thermal runaway of some battery cells 20 affecting the battery cells 20 of other layers, causing further thermal runaway issues, and further ensuring the safety performance of a battery 10.

According to some embodiments of the present application, optionally, the thickness of the connecting portion 211 is smaller than the thickness of other parts of the thermal management component 21 in the first direction H, such that there is a gap between the connecting portion 211 and the battery cell 20, and the gap is configured to get out of the way of connection position between an end cover and a side wall of the battery cell 20.

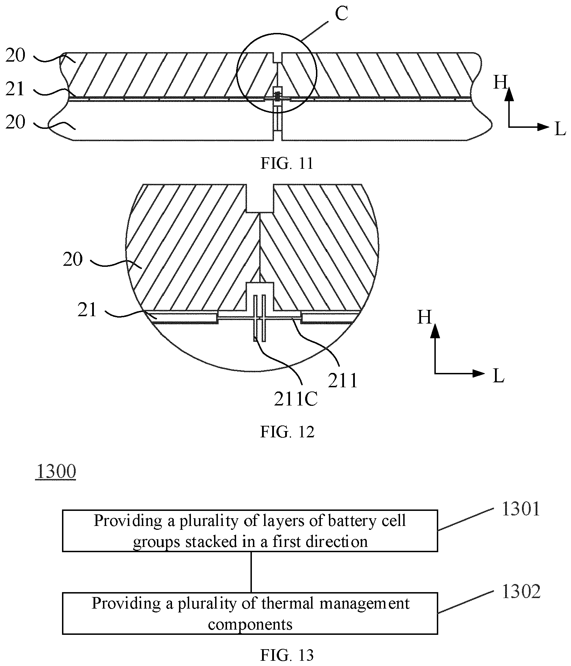

As shown in FIG. 11 and FIG. 12, FIG. 11 is a partial cross-sectional view of a battery 10 according to the embodiments of the present application, the cross-section is parallel to a plane formed by a first direction H and a second direction L, and passes through an axis of a battery cell 20, and FIG. 12 is a schematic diagram of a cross-section of part C in FIG. 11 on the cross-section. It can be seen from FIG. 11 and FIG. 12 that the thickness of a connecting portion 211 of a thermal management component 21 is smaller than the thickness of other parts of the thermal management component 21, that is, the connecting portion 211 is formed by extending a portion of the thermal management component 21 on an end surface perpendicular to the second direction L in the second direction L.

A gap between the connecting portion 211 and the battery cell 20 means that when the battery cell 20 is placed on a surface perpendicular to its thickness direction of the thermal management component 21, a portion of a side wall of the battery cell 20 does not contact the thermal management component 21. The non-contact portion may be, for example, the connection position between an end cover and the side wall of the battery cell 20.

The end cover and the side wall of the battery cell 20 are often connected by welding, which is likely to form an uneven area at the weld, and the connection position between the end cover and the side wall of the battery cell 20 directly contacts the thermal management component 21, which is likely to destroy an insulating layer coated on the surface of the thermal management component 21, causing problems such as insulation failure and weld seam damage. Therefore, there is the gap between the connecting portion 211 and the battery cell 20, which can get out of the way of connection position between the end cover and the side wall of the battery cell 20, avoiding the above problems.

The gap between the connecting portion 211 and the battery cell 20 can prevent the connection position between the end cover and the side wall of the battery cell 20 from destroying the insulating layer on the surface of the thermal management component 21, resulting in insulation failure, ensuring the safety performance of the battery 10.

According to some embodiments of the present application, optionally, a surface of the connecting portion 211 has an insulating layer.

The surface of the thermal management component 21 is often coated with an insulating material to insulate the thermal management component 21 from the battery cell 20. Even if the connecting portion 211 of the thermal management component 21 is not in contact with the battery cell 20, the insulating material may also be coated on the surface of the connecting portion 211 to form an insulating layer on the surface of the connecting portion 211 to further improve an insulating effect.

The surface of the connecting portion 211 has the insulating layer, which can improve the insulating effect of the thermal management component 21, avoid potential safety hazards caused by insulation failure, further improving the safety performance of the battery 10.

According to some embodiments of the present application, optionally, the reinforcing rib 211C is accommodated in space formed by the end cover and an electrode terminal of the battery cell 20.

Since the connecting portion 211 is provided with the reinforcing rib 211C protruding towards the battery cell 20, the reinforcing rib 211C needs to occupy certain space in a direction towards the battery cell 20, which may interfere with the battery cell 20. Therefore, the reinforcing rib 211C may be provided in the space formed by the end cover and the electrode terminal of the battery cell 20. As shown in FIG. 11 and FIG. 12, when the two battery cells 20 in the second direction L are connected through the electrode terminal on the end cover, the certain space may be formed between the electrode terminal and the end cover, and the space is shown in a cross section shown in FIG. 12 as a concave structure with an opening at one end. The interior of the concave structure and a portion extending outwards along the opening both may be referred to as the space formed by the end cover and the electrode terminal of the battery cell 20.

The reinforcing rib 211C is accommodated in the space formed by the end cover and the electrode terminal of the battery cell 20, so there is no need to design additional space to accommodate the reinforcing rib 211C, while minimizing the possibility of interference of the reinforcing rib 211C on the battery cell 20, which may avoid destroying the battery cell 20. Therefore, the safety performance of the battery 10 can be ensured.

According to some embodiments of the present application, optionally, a surface shape of the thermal management component 21 matches a surface shape of the battery cell 20.

The surface of the thermal management component 21 may also have a shape that matches the surface shape of the battery cell 20. For example, when the battery cell 20 is in a cylinder shape, the surface of the thermal management component 21 may have a matching arc face, as shown in FIG. 11 and FIG. 12. FIG. 11 and FIG. 12 show a thermal management component 21 when two layers of battery cells 20 are provided in the battery 10 in the third direction R, where the two layers of battery cells 20 are provided alternately to save space, and a section of the thermal management component 21 in its thickness direction has a wavy shape, while matching the surface shape of the battery cells 20 on both surfaces of the thermal management component 21.

In this way, a contact area between the surface of the thermal management component 21 and the surface of the battery cell 20 is larger, which is more conducive to adjusting the temperature of the battery cell 20, such that the battery cell 20 can maintain the suitable temperature during the use, ensuring the safety performance of the battery 10 including the plurality of battery cells 20 during the use. At the same time, it can also save the space inside the battery 10, which is conducive to improving energy density of the battery 10.

According to some embodiments of the present application, optionally, the plurality of the battery cells 20 of the battery cell group 201 are bonded to the thermal management component 21 in the first direction H.

The battery cell 20 in the plurality of layers of the battery cell groups 201 stacked in the first direction H may be bonded to the thermal management component 21. For example, an adhesive may be coated on one side of the thermal management component 21 facing the battery cell 20, such that when the thermal management component 21 is provided between the adjacent two layers of the battery cell groups 201 in the first direction H, it can be bonded to the plurality of battery cells 20 in the battery cell group 201 through the adhesive.

By bonding the plurality of battery cells 20 of the battery cell group 201 to the thermal management component 21, the plurality of battery cells 20 may be fixed through the thermal management component 21 to improve the strength of the battery cell 20 and the battery cell group 201 formed by the plurality of battery cells 20. At the same time, it can make the battery cell 20 and the thermal management component 21 more closely fit, improve an adjusting effect of the thermal management component 21 on the temperature of the battery cell 20, and enable the battery 10 to maintain the suitable temperature during the use, improving the safety performance of the battery 10.

According to some embodiments of the present application, the present application further provides a power consumption apparatus, including the battery 10 of any one of the above solutions, where the battery 10 is configured to supply electrical energy to the power consumption apparatus.

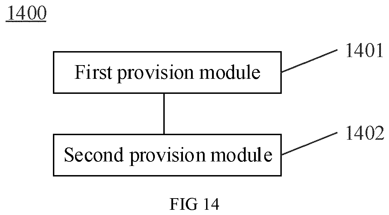

The battery cell 20, the battery 10, and the power consumption apparatus according to the embodiments of the present application are described above, and a method and an apparatus for preparing a battery cell 20 according to the embodiments of the present application will be described below in combination with FIG. 13 and FIG. 14. For the parts that are not described in detail, reference is made to the foregoing embodiments.

FIG. 13 is a schematic flowchart of a method for preparing a battery 10 according to some embodiments of the present application. As shown in FIG. 13, the method 1300 may include:

1301, providing a plurality of layers of battery cell groups 201 stacked in a first direction H, where each layer of the battery cell group 201 includes a plurality of battery cells 20 arranged in an array; and

1302, providing a plurality of thermal management components 21 provided between adjacent two layers of the battery cell groups 201 in the first direction H, where the thermal management component 21 is configured to contain a fluid to adjust temperature of the battery cells 20 located on both sides of the thermal management component 21, the plurality of the thermal management components 21 are connected to each other in a second direction L to isolate the adjacent two layers of the battery cell groups 201, and the second direction L is perpendicular to the first direction H.

FIG. 14 is a schematic block diagram of an apparatus for preparing a battery 10 according to some embodiments of the present application. As shown in FIG. 14, the apparatus 1400 may include:
a first provision module 1401 configured to provide a plurality of layers of battery cell groups 201 stacked in a first direction H are provided, where each layer of the battery cell group 201 includes a plurality of battery cells 20 arranged in an array; and
a second provision module 1402 configured to provide a plurality of thermal management components 21 provided between adjacent two layers of the battery cell groups 201 in the first direction H, where the thermal management component 21 is configured to contain a fluid to adjust temperature of the battery cells 20 located on both sides of the thermal management component 21, the plurality of the thermal management components 21 are connected to each other in a second direction L to isolate the adjacent two layers of the battery cell groups 201, and the second direction L is perpendicular to the first direction H.

## Claims

1. A battery, comprising:
a plurality of layers of battery cell groups (201) stacked in a first direction (H), wherein each layer of the battery cell group (201) comprises a plurality of battery cells (20) arranged in an array; and
a plurality of thermal management components (21) provided between adjacent two layers of the battery cell groups (201) in the first direction (H), wherein the thermal management component (21) is configured to contain a fluid to adjust temperature of the battery cells (20) located on both sides of the thermal management component (21), **characterized in that** the plurality of the thermal management components (21) are connected to each other in a second direction (L) to form a layer of thermal management component groups without gaps to isolate the adjacent two layers of the battery cell groups (201), and the second direction (L) is perpendicular to the first direction (H), and that an end portion of the thermal management component (21) in the second direction (L) is provided with a connecting portion (211), and the connecting portion (211) is configured to connect the adjacent thermal management component (21).

2. The battery according to claim 1, wherein the thickness of the connecting portion (211) is smaller than the thickness of other parts of the thermal management component (21) in the first direction (H), such that there is a gap between the connecting portion (211) and the battery cell (20), and the gap is configured to get out of the way of connection position between an end cover and a side wall of the battery cell (20).

3. The battery according to claim 1 or 2, wherein the connected two connecting portions (211) are fixed by welding.

4. The battery according to any one of claims 1 to 3, wherein one of the two connected connecting portions (211) is provided with a first step structure (211A), and the other is provided with a second step structure (211B), the first step structure (211A) and the second step structure (211B) are provided opposite to each other in the first direction (H), and overlap each other to form a welding plane.

5. The battery according to any one of claims 1 to 3, wherein one of the two connected connecting portions (211) is provided with a protrusion in the second direction (L), and the other is provided with an groove in the second direction (L), the protrusion is provided corresponding to the groove, and the protrusion is accommodated in the groove to achieve the connection of the two connecting portions (211).

6. The battery according to any one of claims 1 to 5, wherein the connecting portion (211) is provided with a reinforcing rib (211C) protruding towards the battery cell (20).

7. The battery according to claim 6, wherein the reinforcing rib (211C) is accommodated in space formed by the end cover and an electrode terminal of the battery cell (20).

8. The battery according to any one of claims 1 to 7, wherein a surface shape of the thermal management component (21) matches a surface shape of the battery cell (20).

9. The battery according to any one of claims 1 to 8, wherein the plurality of the battery cells (20) of the battery cell group (201) are bonded to the thermal management component (21) in the first direction (H).

10. The battery according to any one of claims 1 to 9, wherein a surface of the connecting portion (211) has an insulating layer.

11. A power consumption apparatus, comprising the battery according to any one of claims 1 to 10, wherein the battery is configured to supply electrical energy to the power consumption apparatus.

12. A method for preparing a battery according to any one of claims 1 to 10, comprising:
providing a plurality of layers of battery cell groups (201) stacked in a first direction (H), wherein each layer of the battery cell group (201) comprises a plurality of battery cells (20) arranged in an array; and
providing a plurality of thermal management components (21) provided between adjacent two layers of the battery cell groups (201) in the first direction (H), wherein the thermal management component (21) is configured to contain a fluid to adjust temperature of the battery cells (20) located on both sides of the thermal management component (21), the plurality of the thermal management components (21) are connected to each other in a second direction (L) to isolate the adjacent two layers of the battery cell groups (201), and the second direction (L) is perpendicular to the first direction (H).

13. An apparatus for preparing a battery according to any one of claims 1 to 10, comprising:
a first provision module configured to provide a plurality of layers of battery cell groups (201) stacked in a first direction (H), wherein each layer of the battery cell group (201) comprises a plurality of battery cells (20) arranged in an array; and
a second provision module configured to provide a plurality of thermal management components (21) provided between adjacent two layers of the battery cell groups (201) in the first direction (H), wherein the thermal management component (21) is configured to contain a fluid to adjust temperature of the battery cells (20) located on both sides of the thermal management component (21), the plurality of the thermal management components (21) are connected to each other in a second direction (L) to isolate the adjacent two layers of the battery cell groups (201), and the second direction (L) is perpendicular to the first direction (H).

## Patentansprüche

1. Batterie, aufweisend:
eine Vielzahl von Schichten von Batteriezellengruppen (201), die in einer ersten Richtung (H) gestapelt sind, wobei jede Schicht der Batteriezellengruppe (201) eine Vielzahl von Batteriezellen (20) umfasst, die in einem Array angeordnet sind; und
eine Vielzahl von Wärmemanagementkomponenten (21), die zwischen zwei benachbarten Schichten der Batteriezellengruppen (201) in der ersten Richtung (H) bereitgestellt sind, wobei die Wärmemanagementkomponente (21) so konfiguriert ist, dass sie ein Fluid enthält, um die Temperatur der Batteriezellen (20), die auf beiden Seiten der Wärmemanagementkomponente (21) angeordnet sind, einzustellen, **dadurch gekennzeichnet, dass** die Vielzahl von Wärmemanagementkomponenten (21) miteinander in einer zweiten Richtung (L) verbunden sind, um eine Schicht von Gruppen von Wärmemanagementkomponenten ohne Lücken zu bilden, um die zwei benachbarten Schichten der Batteriezellengruppen (201) zu isolieren, und dass die zweite Richtung (L) senkrecht zu der ersten Richtung (H) liegt, und dass ein Endabschnitt der Wärmemanagementkomponente (21) in der zweiten Richtung (L) mit einem Verbindungsabschnitt (211) bereitgestellt ist und der Verbindungsabschnitt (211) so konfiguriert ist, dass er die benachbarte Wärmemanagementkomponente (21) verbindet.

2. Batterie nach Anspruch 1, wobei die Dicke des Verbindungsabschnitts (211) kleiner als die Dicke anderer Teile der Wärmemanagementkomponente (21) in der ersten Richtung (H) ist, so dass eine Lücke zwischen dem Verbindungsabschnitt (211) und der Batteriezelle (20) vorhanden ist, und die Lücke so konfiguriert ist, dass sie der Verbindungsposition zwischen einer Endabdeckung und einer Seitenwand der Batteriezelle (20) ausweicht.

3. Batterie nach Anspruch 1 oder 2, wobei die zwei verbundenen Verbindungsabschnitte (211) durch Schweißen fixiert sind.

4. Batterie nach einem der Ansprüche 1 bis 3, wobei einer der zwei verbundenen Verbindungsabschnitte (211) mit einer ersten Stufenstruktur (211A) und der andere mit einer zweiten Stufenstruktur (211B) bereitgestellt ist, wobei die erste Stufenstruktur (211A) und die zweite Stufenstruktur (211B) in der ersten Richtung (H) einander gegenüberliegend bereitgestellt sind und einander überlappen, um eine Schweißebene zu bilden.

5. Batterie nach einem der Ansprüche 1 bis 3, wobei einer der zwei verbundenen Verbindungsabschnitte (211) mit einem Vorsprung in der zweiten Richtung (L) bereitgestellt ist und der andere mit einer Nut in der zweiten Richtung (L) bereitgestellt ist, wobei der Vorsprung entsprechend der Nut bereitgestellt ist und der Vorsprung in der Nut untergebracht ist, um die Verbindung der beiden Verbindungsabschnitte (211) zu erzielen.

6. Batterie nach einem der Ansprüche 1 bis 5, wobei der Verbindungsabschnitt (211) mit einer Verstärkungsrippe (211C) bereitgestellt ist, die in Richtung der Batteriezelle (20) hervorsteht.

7. Batterie nach Anspruch 6, wobei die Verstärkungsrippe (211C) in einem Raum untergebracht ist, der von der Endabdeckung und einem Elektrodenanschluss der Batteriezelle (20) gebildet wird.

8. Batterie nach einem der Ansprüche 1 bis 7, wobei eine Oberflächenform der Wärmemanagementkomponente (21) mit einer Oberflächenform der Batteriezelle (20) übereinstimmt.

9. Batterie nach einem der Ansprüche 1 bis 8, wobei die Vielzahl von Batteriezellen (20) der Batteriezellengruppe (201) mit der Wärmemanagementkomponente (21) in der ersten Richtung (H) verklebt sind.

10. Batterie nach einem der Ansprüche 1 bis 9, wobei eine Oberfläche des Verbindungsabschnitts (211) eine Isolierschicht aufweist.

11. Stromverbrauchsgerät, umfassend die Batterie nach einem der Ansprüche 1 bis 10, wobei die Batterie so konfiguriert ist, dass sie dem Stromverbrauchsgerät elektrische Energie zuführt.

12. Verfahren zum Herstellen einer Batterie nach einem der Ansprüche 1 bis 10, umfassend:
Bereitstellen einer Vielzahl von Schichten von Batteriezellengruppen (201), die in einer ersten Richtung (H) gestapelt sind, wobei jede Schicht der Batteriezellengruppe (201) eine Vielzahl von Batteriezellen (20) umfasst, die in einem Array angeordnet sind; und
Bereitstellen einer Vielzahl von Wärmemanagementkomponenten (21), die zwischen zwei benachbarten Schichten der Batteriezellengruppen (201) in der ersten Richtung (H) bereitgestellt sind, wobei die Wärmemanagementkomponente (21) so konfiguriert ist, dass sie ein Fluid enthält, um die Temperatur der Batteriezellen (20), die auf beiden Seiten der Wärmemanagementkomponente (21) angeordnet sind, einzustellen, wobei die Vielzahl von Wärmemanagementkomponenten (21) in einer zweiten Richtung (L) miteinander verbunden sind, um die zwei benachbarten Schichten der Batteriezellengruppen (201) zu isolieren und wobei die zweite Richtung (L) senkrecht zu der ersten Richtung (H) liegt.

13. Vorrichtung zum Herstellen einer Batterie nach einem der Ansprüche 1 bis 10, umfassend:
ein erstes Bereitstellungsmodul, das so konfiguriert ist, dass es eine Vielzahl von Schichten von Batteriezellengruppen (201) bereitstellt, die in einer ersten Richtung (H) gestapelt sind, wobei jede Schicht der Batteriezellengruppe (201) eine Vielzahl von Batteriezellen (20) umfasst, die in einem Array angeordnet sind; und
ein zweites Bereitstellungsmodul, das so konfiguriert ist, dass es eine Vielzahl von Wärmemanagementkomponenten (21) bereitstellt, die zwischen zwei benachbarten Schichten der Batteriezellengruppen (201) in der ersten Richtung (H) bereitgestellt sind, wobei die Wärmemanagementkomponente (21) so konfiguriert ist, dass sie ein Fluid enthält, um die Temperatur der Batteriezellen (20), die auf beiden Seiten der Wärmemanagementkomponente (21) angeordnet ist, einzustellen, wobei die Vielzahl von Wärmemanagementkomponenten (21) in einer zweiten Richtung (L) miteinander verbunden sind, um die zwei benachbarten Schichten der Batteriezellengruppen (201) zu isolieren und wobei die zweite Richtung (L) senkrecht zu der ersten Richtung (H) liegt.

## Revendications

1. Batterie, comprenant :
une pluralité de couches de groupes de cellules de batterie (201) empilées dans une première direction (H), dans laquelle chaque couche du groupe de cellules de batterie (201) comprend une pluralité de cellules de batterie (20) agencées en un réseau ; et
une pluralité de composants de gestion thermique (21) disposés entre deux couches adjacentes des groupes de cellules de batterie (201) dans la première direction (H), dans laquelle le composant de gestion thermique (21) est configuré pour contenir un fluide pour régler la température des cellules de batterie (20) situées des deux côtés du composant de gestion thermique (21), **caractérisée en ce que** les composants de gestion thermique de la pluralité de composants de gestion thermique (21) sont connectés les uns aux autres dans une seconde direction (L) pour former une couche de groupes de composants de gestion thermique sans espace pour isoler les deux couches adjacentes des groupes de cellules de batterie (201), et la seconde direction (L) est perpendiculaire à la première direction (H), et **en ce qu'**une partie d'extrémité du composant de gestion thermique (21) dans la seconde direction (L) est dotée d'une partie de connexion (211), et la partie de connexion (211) est configurée pour connecter le composant de gestion thermique adjacent (21).

2. Batterie selon la revendication 1, dans laquelle l'épaisseur de la partie de connexion (211) est inférieure à l'épaisseur d'autres pièces du composant de gestion thermique (21) dans la première direction (H), de sorte qu'il y ait un espace entre la partie de connexion (211) et la cellule de batterie (20), et l'espace est configuré pour sortir de la voie de position de connexion entre un couvercle d'extrémité et une paroi latérale de la cellule de batterie (20).

3. Batterie selon la revendication 1 ou 2, dans laquelle les deux parties de connexion connectées (211) sont fixées par soudage.

4. Batterie selon l'une quelconque des revendications 1 à 3, dans laquelle une des deux parties de connexion connectées (211) est dotée d'une première structure de pas (211A), et l'autre est dotée d'une seconde structure de pas (211B), la première structure de pas (211A) et la seconde structure de pas (211B) sont disposées à l'opposé l'une de l'autre dans la première direction (H), et se chevauchent pour former un plan de soudage.

5. Batterie selon l'une quelconque des revendications 1 à 3, dans laquelle une des deux parties de connexion connectées (211) est dotée d'une saillie dans la seconde direction (L), et l'autre est dotée d'une rainure dans la seconde direction (L), la saillie est disposée de manière à correspondre à la rainure, et la saillie est reçue dans la rainure pour obtenir la connexion des deux parties de connexion (211).

6. Batterie selon l'une quelconque des revendications 1 à 5, dans laquelle la partie de connexion (211) est dotée d'une nervure de renforcement (211C) faisant saillie en direction de la cellule de batterie (20).

7. Batterie selon la revendication 6, dans laquelle la nervure de renforcement (211C) est reçue dans un espace formé par le couvercle d'extrémité et une borne d'électrode de la cellule de batterie (20).

8. Batterie selon l'une quelconque des revendications 1 à 7, dans laquelle une forme de surface du composant de gestion thermique (21) correspond à une forme de surface de la cellule de batterie (20).

9. Batterie selon l'une quelconque des revendications 1 à 8, dans laquelle les cellules de batterie de la pluralité de cellules de batterie (20) du groupe de cellules de batterie (201) sont liées au composant de gestion thermique (21) dans la première direction (H).

10. Batterie selon l'une quelconque des revendications 1 à 9, dans laquelle une surface de la partie de connexion (211) présente une couche isolante.

11. Appareil de consommation de puissance, comprenant la batterie selon l'une quelconque des revendications 1 à 10, dans lequel la batterie est configurée pour fournir de l'énergie électrique à l'appareil de consommation de puissance.

12. Procédé de préparation d'une batterie selon l'une quelconque des revendications 1 à 10, comprenant :
la fourniture d'une pluralité de couches de groupes de cellules de batterie (201) empilées dans une première direction (H), dans lequel chaque couche du groupe de cellules de batterie (201) comprend une pluralité de cellules de batterie (20) agencées en un réseau ; et
la fourniture d'une pluralité de composants de gestion thermique (21) disposés entre deux couches adjacentes des groupes de cellules de batterie (201) dans la première direction (H), dans lequel le composant de gestion thermique (21) est configuré pour contenir un fluide pour régler la température des cellules de batterie (20) situées des deux côtés du composant de gestion thermique (21), les composants de gestion thermique de la pluralité de composants de gestion thermique (21) étant connectés les uns aux autres dans une seconde direction (L) pour isoler les deux couches adjacentes des groupes de cellules de batterie (201), et la seconde direction (L) est perpendiculaire à la première direction (H).

13. Appareil de préparation d'une batterie selon l'une quelconque des revendications 1 à 10, comprenant :
un premier module de fourniture configuré pour fournir une pluralité de couches de groupes de cellules de batterie (201) empilées dans une première direction (H), dans lequel chaque couche du groupe de cellules de batterie (201) comprend une pluralité de cellules de batterie (20) agencées en un réseau ; et
un second module de fourniture configuré pour fournir une pluralité de composants de gestion thermique (21) disposés entre deux couches adjacentes des groupes de cellules de batterie (201) dans la première direction (H), dans lequel le composant de gestion thermique (21) est configuré pour contenir un fluide pour régler la température des cellules de batterie (20) situées des deux côtés du composant de gestion thermique (21), les composants de gestion thermique de la pluralité des composants de gestion thermique (21) sont connectés les uns aux autres dans une seconde direction (L) pour isoler les deux couches adjacentes des groupes de cellules de batterie (201), et la seconde direction (L) est perpendiculaire à la première direction (H).
